# EUROPÄISCHE PATENTSCHRIFT

(11) **EP 0 847 523 B1**
(45) Veröffentlichungstag und Bekanntmachung des Hinweises auf die Patenterteilung: **14.06.2000**
(21) Anmeldenummer: 96937183.0
(22) Anmeldetag: 30.08.1996
(51) Int. Cl.: G01N 1/22, B01D 63/06, G01N 30/60

(54) **VORRICHTUNG UND VERFAHREN ZUR ENTNAHME UND BESTIMMUNG FLÜCHTIGER ODER GELÖSTER KOMPONENTEN IN FLÜSSIGKEITEN ODER GASEN**
DEVICE AND METHOD FOR THE REMOVAL AND DETERMINATION OF VOLATILE OR DISSOLVED COMPONENTS OF LIQUIDS OR GASES
PROCEDE ET DISPOSITIF PERMETTANT D'ELIMINER ET DE DETECTER DES CONSTITUANTS VOLATILS OU DISSOUS DANS DES LIQUIDES OU DES GAZ

(30) Priorität: 30.08.1995 DE 19533510
(43) Veröffentlichungstag der Anmeldung: 17.06.1998
(73) Patentinhaber: Biotechnologie Kempe GmbH, 10557 Berlin (DE)
(72) Erfinder: Thamm, Dirk, 12621 Berlin (DE)
(74) Vertreter: Jungblut, Bernhard Jakob
(86) Internationale Anmeldenummer: DE9601655
(87) Internationale Veröffentlichungsnummer: WO9708533

(56) Entgegenhaltungen:
- EP-A- 0 174 417
- DE-A- 3 611 596
- US-A- 4 240 912
- US-A- 4 265 249
- US-A- 4 997 565

## Beschreibung

Die Erfindung betrifft eine Vorrichtung und ein Verfahren zur Entnahme und Bestimmung gelöster Gase oder flüchtiger Komponenten in einer Flüssigkeit oder einem Gasgemisch zum Zwecke der Bestimmung ihrer Konzentration. Die Vorrichtung eignet sich besonders zur Ermittlung organischer Lösungsmittel, flüchtiger Kohlenwasserstoffe, CO₂, O₂ und ähnlicher Gase und ist deshalb einem breiten Anwendungsgebiet zugänglich. Sie gewährleistet eine kontinuierliche Entnahme zur Bestimmung der Konzentration flüchtiger und/oder gelöster Stoffe. Diese kontinuierliche Entnahme ist für eine Vielzahl von Anwendungsmöglichkeiten, wie beispielsweise zur Beobachtung, Bedienung und Steuerung von Produktionsprozessen oder zur Überwachung und rechtzeitigen Erkennung von Umweltbelastungen von großer Bedeutung.

Für den Stoffübergang eines gelösten Gases aus der Flüssigkeit zu einem Trägergas werden vordringlich zylinderförmige Sonden verwendet. Derartige Sonden mit zylindrischem Körper können in geschlossenen Behältern mit wechselnden Füllständen installiert werden. Sie verwenden eine schlauchförmige Zylinderoberfläche oder aber eine Zylinderstirnfläche zum Stoffaustausch. Eine solche Stirnfläche, wie sie beispielsweise in DE 36 11 596 A1 beschrieben ist, verfügt über eine kleine Austauschfläche und ist deshalb zum Nachweis geringerer Konzentrationen schlechter geeignet. Bei Sonden mit schlauchförmiger Austauschfläche wie sie beispielsweise in der DE-OS 2 310 264, in der EP 0 054 537 A1 oder in der EP 0 174 417 A1 beschrieben sind, ist der Trägergaskanal gewindeförmig in den Sondenfinger eingearbeitet und mit einer permeablen Membran umspannt. Eine Querbohrung zum Sondeninneren sowie eine Sackbohrung innerhalb der Sonde sorgen für die Zuführung des angereicherten Trägergases zu einem Analysator. Nachteilig bei den in der EP 0 054 537 A1 oder in der EP 0 174 417 A1 beschriebenen Sonden sind der komplizierte Aufbau und die damit verbundene Störanfälligkeit, die Anordnung des Sensors in der Sonde und der lange Transportweg des Trägergases durch einen einzigen Permeationskanal. Letzteres ist mit einem vergleichsweise großen Trägergasvolumen und relativ langen Verweilzeiten des Trägergases in der Sonde verbunden. Meßvorrichtungen mit einem außen angeordneten, spiralig geformten Membranschlauch sind aus der US 5 317 932 und der WO 93/16790 A1 bekannt. Weiterhin ist in der US 4 240 912 eine mit einer Membran überzogene Meßvorrichtung beschrieben, bei der die darunter liegenden Permeationskanäle an der Spitze spiralig angeordnet sind, und aus der US 4 265 249 ist ein Katheter für Körperflüssigkeiten mit parallelem Nutenverlauf an der Spitze bekannt.

Herkömmliche Sonden sind für einen zu messenden Konzentrationsbereich konzipiert. Für Messungen in anderen Konzentrationsbereichen muß die Sonde umkonstruiert werden, um eine Anpassung der Arbeitsbereiche der Sonde und des Sensors zu erreichen, denn die zur Messung effektiv genutzte Membranfläche ist konstant und durch die Konstruktion vorgegeben. Herkömmliche Sonden können normalerweise nicht in wechselnden Konzentrationsbereichen eingesetzt werden.

Eine Methode zur Anpassung der Konzentration der Substanz im Trägergas besteht in der Verdünnung der Meßkomponenten vor deren Messung im Sensor durch einen Trägergas-Bypaß wie er aus dem Stand der Technik bekannt ist (Mandenius, C. F., Holst, O.: Monitoring of ethanol in production of baker's yeast using an improvedment membrane gas sensor. Acta Chemica Scandinavica, B37 (1983), Nr.8, S. 746-748).

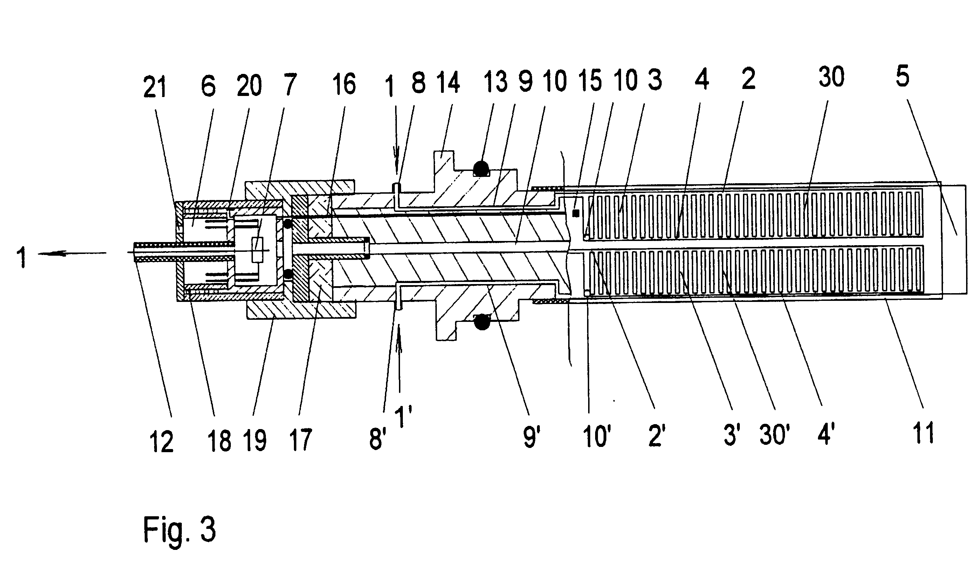

Ein Problem herkömmlicher Sonden ist deren Meßwertverfälschung bei Änderungen der Flüssigkeitstemperatur. Die starke Temperaturabhängigkeit betrifft den Stoffübergang durch die Membran und die Kennlinie des Sensors. Eine Temperaturänderung von beispielsweise 25°C auf 35°C bei einer Flüssigkeitskonzentration von 1 Vol% Ethanol in Wasser verändert den Stoffübergang an einer Silicon-Membran bereits um etwa 75%. Der zweite Effekt - die starke Temperaturabhängigkeit der Sensoren - wird am Beispiel der Kennlinie oft verwendeter Zinndioxid (SnO₂) Halbleiter-Gassensoren in Fig. 2 dargestellt: Die Kennlinie des Sensors verschiebt sich durch Temperaturerhöhung hin zu niedrigeren Widerständen (kleinerem Meßbereich). Falls der Sensor wie in der EP 0 054 537 A1 oder in der EP 0 174 417 A1 im Innern der Sonde angeordnet ist, überlagern sich beide Effekte: Eine Temperaturerhöhung in der Flüssigkeit vergrößert zunächst den Stoffübergang durch die Membran (Konzentrationserhöhung im Trägergas). In dem Maße, in dem durch Wärmeaufnahme die Temperatur der Sonde erhöht wird, verschiebt sich auch die Sensorkennlinie. Durch die zeitversetzte Wirkung auf Stoffübergang und Sensor ergibt sich ein komplizierter dynamischer Zusammenhang zwischen der Temperaturänderung in der Flüssigkeit und dem Meßergebnis. Herkömmliche Sonden berücksichtigen nicht die zeitversetzte Teilwirkung der Temperaturänderung der Flüssigkeit auf die Membran und den Sensor, da nur extern die augenblickliche Flüssigkeitstemperatur und nicht die unmittelbare Membrantemperatur und die Sensortemperatur bei der Temperaturkompensation des Meßergebnisses berücksichtigt wird. Herkömmliche Sonden sind somit nur für ein eingeschwungenes Temperaturniveau einsetzbar. In Phasen der Temperaturschwankungen der Flüssigkeit treten erhebliche Meßfehler auf. In der DE 36 11 596 A1 werden zwei Temperatursensoren zur Regelung der Sondentemperatur (hier Permistor) und zur Temperaturregelung der beheizbaren Membran eingesetzt. Dies ist relativ aufwendig, komplex und somit nicht kostengünstig.

Es ist die Aufgabe der Erfindung, eine Vorrichtung und ein Verfahren zur Entnahme und Bestimmung flüchtiger und/oder gelöster Komponenten in Flüssigkeiten oder Gasen anzugeben, welche bei kurzen Ansprechzeiten in einem breiten Einsatzgebiet anwendbar, für verschiedene Einsatzfälle konfigurierbar und zum Nachweis einer oder mehrere Komponenten in verschiedenen Konzentrations-Meßbereichen geeignet ist.

Die erfindungsgemäße Vorrichtung zur Bestimmung flüchtiger oder gelöster Komponenten in Flüssigkeiten oder Gasen, bestehend aus einem zylindrischen Grundkörper mit Permeationskanälen an seiner äußeren Oberfläche zur Aufnahme eines Trägermediums, einer über den Permeationskanälen angeordneten Permeationsmembran, Zu- und Rückführkanälen für das Trägermedium und Meßeinrichtungen, ist dadurch gekennzeichnet, daß die Permeationskanäle in einem Segment oder in mehreren Segmenten 30;30' an der Oberfläche des Grundkörpers 5 angeordnet sind, wobei jedes Segment 30;30' jeweils eine Zuführnut 2;2', eine Rückführnut 4;4' und von der Zuführnut 2;2' zur Rückführnut 4;4' zueinander parallele Verbindungskanäle 3;3' aufweist; jedes Segment 30;30' über die Zuführnut 2;2' und einen separaten Zuführkanal 9;9' mit einem Trägermedieneintritt 8;8' verbunden ist; und jedes Segment 30;30' über die Rückführnut 4;4' und einen oder mehrere Rückführkanäle 10;10' mit einem Trägermedienaustritt 12;12' verbunden ist.

Die wiederholte Angabe der Bezugszeichen, z.B. 30;30' bedeutet, daß wenigstens eines dieser Mittel vorhanden ist, aber auch mehrere vorhanden sein können.

Für den Fall, daß vorzugsweise mehrere Segmente 30;30' vorhanden sind, können diese zuschaltbar und abschaltbar sein und bilden damit eine stufenweise einstellbare Permeationsfläche.

Im Grundkörper können zur Verdünnung des Trägermediums, das mit den zu bestimmenden Komponenten angereichert ist, Temperierkanäle 22 mit einem durch Stelleinrichtungen 23;24 einstellbaren Trägermedien-Bypass angeordnet sein.

Die erfindungsgemäße Vorrichtung enthält einen ersten Temperatursensor 15 direkt unter der Permeationsmembran 11, jedoch räumlich getrennt vom Sensor 7. Dieser Temperatursensor mißt die Temperatur der Permeationsmembran.

In Verbindung mit einem Rückführkanal 10;10' ist der Sensor 7 zum quantitativen Konzentrationsnachweis der zu bestimmenden Komponenten angeordnet.

Ein zweiter Temperatursensor 20 ist zur Erfassung der Temperatur der Umgebung des Sensors 7 vorhanden.

Eine Heizung 18 ist zur Regelung der Temperatur der Umgebung des Sensors 7 vorhanden.

Eine vorteilhafte Ausführungsform de Vorrichtung besteht darin, daß die Summe der Querschnitte der Verbindungsnuten 3 dem Querschnitt der Zuführungsnut 2 oder der Rückführungsnut 4 entspricht.

Der Aufbau der erfindungsgemäßen Meß- und Entnahmevorrichtung ist weniger kompliziert als beim Stand der Technik. Die Entnahmevorrichtung ist daher weniger störanfällig und weniger kostenintensiv als herkömmliche Sonden. Eine höhere Wirtschaftlichkeit ist durch die Verringerung des Trägermedienverbrauchs bei vergleichbarer Membranfläche gegeben, wobei bessere dynamische Ansprecheigenschaften durch eine geringere Verweilzeit des Trägermediums in der Sonde zu verzeichnen sind, bei der auch in Phasen mit Temperaturschwankungen des Meßmediums korrekte Meßwerte ermittelt werden.

Bei der erfindungsgemäßen Vorrichtung besteht der Sondenkörper aus einem Grundkörper, dem zylinderförmigem Bauteil mit Flansch. Der Grundkörper verfügt dabei über außenseitig scheitelförmig verlaufende, mit einem oder mehreren Zuführnuten und einem oder mehreren Rückführnuten versehene Permeationskanäle zur Aufnahme des Trägermediums.

Unter einer scheitelförmigen Führung der Permeationskanäle versteht man die Einspeisung des Trägermediums in eine Zuführnut, seine Verteilung auf kamm-artig ein- oder beidseitig von der Zuführnut abgehende zueinander parallele Permeationskanäle, die in die jeweiligen Rückführnuten münden. Dies kann eine Nut sein oder auch zwei Nuten bei kamm-artig beidseitig abgehenden Permeationskanälen. Von dort aus erfolgt der Rücktransport des Trägermediums. Die Permeationskanäle können dabei von einer oder beiden Seiten in die Rückführnut münden.

Die Begriffe "Permeationskanäle" und "Verbindungskanäle" werden im Text synonym verwendet.

Die Vorrichtung kann weiterhin mit einem Temperatursensor zur rechnerischen Temperaturkompensation des Membran-Stoffübergangs ausgestattet sein. Dieser Sensor kann mehrfach vorhanden sein. Die Permeationskanäle und der Temperatursensor sind durch eine selektiv wirkende Permeationsmembran abgedeckt. Die Permeationskanäle werden über Zuführkanäle mit dem Trägermedium versorgt. Die Entsorgung der Permeationskanäle erfolgt über die Rückführkanäle zum Trägermedienaustritt. Das angereicherte Trägermedium kann durch im Sondenkörper verlaufende Temperierkanäle mit einem einstellbaren Trägermedien-Bypaß verdünnt werden. Das mit der oder den Meßkomponenten angereicherte Trägermedium kann zu einem am Sondenkopf wärmeisoliert zum Grundkörper installierten Sensorträger mit temperaturstabilisiertem Sensor zwecks quantitativem Konzentrationsnachweis geführt werden.

Es ist im Falle geringerer Konzentrationen der angereicherten Substanz von Vorteil, wenn der Trägermedien-Bypaß mit Temperierkanälen entfällt und/oder jeweils nur eine Zulaufnut und eine Rückführnut verwendet wird.

Vorteilhafterweise verfügt der Grundkörper an seinem Fußende über eine Gewindebohrung oder einen Gewindestift, über die bzw. den ein Stopfen am Grundkörper montiert werden kann. Der Stopfen ist gegenüber dem Stutzen arretiert, z.B. durch einen Stift, der durch Stutzen und Stopfen geführt ist und der den Stopfen bei An- bzw. Abschrauben des Grundkörpers fixiert und somit gegen Verdrehen schützt. Um den Austritt von Flüssigkeit bei Sondeninstallation in einem Behälter zu verhindern, verfügt entweder der Behälterstutzen über eine Abdichtung, z.B. einen 0-Ring, oder Stopfen und Grundkörper sind mit einer Abdichtung, z.B. einem O-Ring, ausgestattet.

Darüber hinaus ist von Vorteil, wenn der Grundkörper über der Permeationsmembran und über der im Bedarfsfall installierten Schutzmembran eine mit öffnungen versehene Schutzhülle aufweist und diese beispielsweise mittels Gewinde am Grundkörper in einem solchen Abstand installiert ist, daß unter der Schutzhülle genügend Abstand zum Zirkulieren des Meßmediums verbleibt und zwischen äußerer Schutzhülle, Grundkörper und Stopfen eine plane Oberfläche entsteht.

Durch die erfindungsgemäße scheitelförmige und im wesentlichen parallel Anordnung der Permedtionskanäle wird eine Verringerung des Trägermedienvolumens und Verkleinerung der Verweilzeit bei gleichzeitiger Beibehaltung der stoffübergangsfläche erreicht. Im Gegensatz zu einer nach dem Stand der Technik gewindeförmigen Trägermedienführung erlaubt die scheitelförmige Trägermedienführung eine Aufteilung des Trägermedienstroms auf viele parallel verlaufende Permeationskanäle. Durch Anzahl und Querschnitt der Permeationskanäle können Trägermedienvolumen und Verweilzeit bei vergleichbarer Membranfläche so reduziert werden, daß insgesamt ein günstigeres dynamisches Verhalten erzielt wird.

In der vorteilhaft weitergebildeten Vorrichtung wird die Überlagerung der Temperaturabhängigkeiten von Membran und Sensor dadurch ausgeschlossen, daß der Sensor am Kopfende der Sonde, wärmeisoliert von der Sonde, angeordnet und seine Umgebungstemperatur durch eine Temperaturregelung stabilisiert wird. Weiterhin wird die Temperatur direkt unter der Permeationsmembran durch einen integrierten Temperatursensor gemessen. Die Anordnung des Temperatursensors unter der Permeationsmembran ermöglicht die Messung direkt an der Membran. Der Temperatursensor ist für einen Austausch zugänglich, wobei lediglich die Permeationsmembran zu entfernen und dann wieder neu zu installieren ist. Die Temperaturabhängigkeit des Membran-Stoffübergangs kann extern rechnerisch, z.B. durch einen Computer, oder direkt am Sensor durch eine elektronische Kompensationsschaltung ausgeglichen werden. Die Kenntnis des Temperatur-Zeitverhaltens des Membran-Stoffübergangs erlaubt eine dynamische (zeitabhängige) Kompensation ohne Störung durch Überlagerung des Sensor-Einflusses.

Wenn mehrere Sensoren vorhanden sind, können jeweils auch mehrere Temperatursensoren vorhanden sein.

Für den Fall konstanter Flüssigkeitstemperaturen können der Temperatursensor an der Permeationsmembran und die rechnerische Temperaturkompensation und/oder elektronische Kompensationsschaltung entfallen.

Neben der Sensor-Umgebungstemperatur wirkt die Temperatur des Trägergases auf die Arbeitsweise des Sensors. Der eingehende Trägergasstrom ist wesentlich kälter als die Sensor-Oberfläche und führt zu einer Abkühlung derselben. Kleinere Schwankungen der Trägergas-Temperatur kann der sensor kompensieren. Überschreitet die Trägergas-Temperatur aber einen gewissen Betrag, so ist ein Temperieren des Trägergases auf Arbeitstemperatur notwendig, um eine Verschiebung des Sensor-Arbeitspunktes zu vermeiden.

Es ist somit günstig, zwischen Sonde und Sensor eine Temperierstufe zum Einstellen der Arbeitstemperatur des Trägermediums zu installieren. Im Falle veränderlicher Flüssigkeitstemperaturen kann die Temperierstufe mit einem Temperatursensor als Geber für einen Regelkreis zur Einstellung der Trägermedien-Arbeitstemperatur ausgestattet sein. Auch der Temperatursensor an der Permeationsmembran kann als solcher Geber verwendet werden. Wird das Trägermedium in der Temperierstufe stark abgekühlt, kann eine drohende Kondensatbildung durch eine Trägermedien-Trocknung am Ausgang der Temperierstufe verhindert werden.

Liegt die Temperatur des zu messenden Mediums konstant im Bereich der Trägermedien-Arbeitstemperatur, so kann die Temperierstufe entfallen. Ist die Differenz zwischen diesen beiden Temperaturen konstant, so können Regelkreis und Temperatursensor entfallen. Wird das Trägermedium in der Temperierstufe nicht abgekühlt, so kann die Trocknungsstufe entfallen, da keine Gefahr einer Kondensatbildung besteht.

Da bei der erfindungsgemäßen Vorrichtung die wirksame Permeationsfläche variabel ist, ist es möglich immer im empfindlichen Teil der Sensorkennlinie zu arbeiten. Die variable Fläche wird dadurch erreicht, daß mehrere Flächensegmente (Permeationssegmente) auf der zylindrischen Oberfläche der Vorrichtung, speziell des Sondenfingers angeordnet werden. Ein Permeationssegment ist somit ein Teil der zylindrischen Mantelfläche auf dem Sondenkörper, der jeweils eine Zuführ- und eine Rückführnut sowie die zwischen beiden verlaufenden Pemeationskanäle umfaßt, durch Zuführ- und Rückführkanal mit Trägermedium ver- bzw. entsorgt und durch die Permeationsmembran abgedeckt und dadurch vom Nachweismedium getrennt wird.

Die Segmente werden getrennt mit Trägergas versorgt. Ihre Rückführkanäle werden im Sondeninneren gemeinsam dem Sensor zugeleitet. Die Segmente können bei Bedarf von außen über das Trägergas "zugeschaltet" bzw. "abgeschaltet" werden und führen so zu einer im laufenden Betrieb stufenweise einstellbaren Permeationsfläche.

Durch geschickte Wahl des Verdünnungsverhältnisses kann über einen größeren Meßbereich die hohe Empfindlichkeit des Sensors im unteren Konzentrationsbereich genutzt werden. Das Verdünnungsverhältnis geht in die Sonden-Eichung ein. Dazu muß das Bypaß-Trägergas konstant über die gleiche Temperatur wie das mit den Meßkomponenten angereicherte Trägergas verfügen, um Konzentrationsänderungen durch Mischen bei unterschiedlichen Temperaturen zu vermeiden. Dazu wird das Bypaß-Medium im Innern der Sonde über einen Temperierkanal auf gleiche Temperatur gebracht.

Der Temperierkanal kann in verschiedenen Formen ausgeführt sein. Bei geringer Differenz zwischen Temperatur des Trägergases und Temperatur der Flüssigkeit (mit Meßkomponente) reichen zwei Sackbohrungen ins Sondeninnere aus, die mit einer Querbohrung verbunden sind. Höhere Temperaturdifferenzen erfordern eine größere Wärmeübergangsfläche, so daß eine Führung des Temperierkanals direkt unter der Sondenoberfläche ebenfalls scheitelförmig oder klassisch gewindeförmig notwendig wird. Wie weiter oben beschrieben, ist der scheitelförmigen Temperierkanal wegen kleinerem Volumen bei gleicher Wärmetauschfläche zu bevorzugen. In jedem Fall muß ein stabiles Gleichgewicht zwischen Meßgasdurchfluß und Bypaßgasdurchfluß vorhanden sein. Beide Kanäle können über Stelleinrichtungen zu Einstellung des Trägermediendurchflusses verfügen, beispielsweise über Regulierschrauben mit Durchbohrung. Der Gasdurchfluß kann bei Bedarf vollständig unterbrochen werden. Die getrennte Einspeisung unterschiedlicher Volumenströme an Bypaß- und Trägergas von Außen ist ebenfalls eine praktikable Lösung. Durch Verstellen des Mischverhältnisses erfolgt somit eine Meßbereichsanpassung für die Vorrichtung.

Im speziellen Anwendungsfall kann es von Vorteil sein, die Permeationsmembran gegen aggressive Medien mittels einer selektiven schlauchförmigen Schutzmembran zu schützen und mittels Festdrehens des Stopfens an ihren Stirnflächen abzudichten, soweit diese nicht durch ihr Aufbringen auf die Permeationsmembran bereits über einen festen sitz verfügt. Als Beispiel sei hier die Ethanol-Konzentrationsmessung bei der Essigsäureherstellung genannt.

Die Vorrichtung kann zur Anreicherung eines Trägergases mit flüchtigen Komponenten benutzt werden, das anschließend nach Präparation des Gasstromes einem externen Analysator zugeführt wird. Beispiele hierfür seien Flammenionisationsdetektoren, Massenspektrometer oder Gaschromatographen. Die Vorrichtung wird dann ausschließlich zur Probenahme verwendet. Sie ist dann nicht mit einem Sensor ausgestattet. Durch geschickte Wahl der Permeationsmembran und des Sensors kann die Vorrichtung auch zur Bestimmung von Komponentenkonzentrationen in Gasgemischen eingesetzt werden.

In einem breiten Anwendungsgebiet ist es von Vorteil, mehrere gelöste und/oder flüchtige Komponenten gleichzeitig mit einer Vorrichtung zu bestimmen, beispielsweise die Gelöst-O₂ und die Gelöst-CO₂ Konzentration in der Fermentationstechnologie. Dazu können mehrere Sensoren in Reihe in den gemeinsamen Rückführkanal eines oder mehrere Segmente mit oder ohne Bypaß angeordnet werden. Die Anordnung der Sensoren kann unmittelbar am Sondenkopf oder extern erfolgen. Dies kann für einige spezielle Anwendungen zulässig sein, jedoch ist hier nachteilig, daß die Membran, die Fläche, die Trägergasart und der Trägergasstrom für mehrere Analysatoren gleichzeitig zu optimieren sind.

Werden die Rückführkanäle einzelner Segmente getrennt aus dem Sondenkörper geführt, können die Permeationsfläche und der Trägergasstrom für die einzelnen Analysatoren individuell optimiert werden. Das Aufbringen verschiedenartiger Membranen für jedes Segment ist möglich. Die Segmente können mit unterschiedlichen Trägermedien betrieben werden. Die Sensoren können wiederum am Sondenkopf oder extern montiert werden. Bei der Anordnung am Sondenkopf sind Sensorträger von Vorteil, die eine kreisringförmige oder rechteckige Grundfläche mit einer Aussparung in der Mitte aufweisen. Beispielsweise können auf einem kreisringförmigen Sensorträger um die Aussparung mehrere Sensoren angeordnet werden. Die Aussparung in der Mitte bleibt für die Zuführkanäle zu den Permeationssegmenten frei. Die gleiche Aussparung erlaubt die Führung der Rückführkanäle von den Permeationssegmenten zu den Sensoren. Zuführ- und Rückführkanäle können aus flexiblem Kunststoff sein um so eine gute Handhabbarkeit der Permeationssonde zu erreichen.

Eine weitere vorteilhafte Ausführung einer Vorrichtung mit mehreren Sensoren besteht in der Verwendung unterschiedlicher Permeationsmembranen für die einzelnen Segmente, wobei sich die Membranen hinsichtlich der Parameter des Stoffdurchgangs für die einzelnen gelösten und/oder flüchtigen Kompenenten oder Gase unterscheiden. Dadurch kann eine selektive Entnahme der zu messenden Komponenten erzielt werden die vorteilhaft für die Anpassung an die Sensoreigenschaften ist (Erhöhung der meßbaren Konzentration, Auschluß von Überlagerungseffekten).

Gegenstand der Erfindung ist auch ein Verfahren zur Bestimmung flüchtiger oder gelöster Komponenten in Flüssigkeiten oder Gasen durch Kontaktieren eines Gases oder einer Flüssigkeit mit einer Vorrichtung, die an ihrer Außenseite eine Permeationsmembran mit darunter liegenden Permeationskanälen aufweist und die dadurch gekennzeichnet, daß in einem Grundkörper 5 der Vorrichtung ein Trägermedium 1 über einen Trägermediumeintritt 8 zu einem oder mehreren Segmenten 30 über jeweils separate Zuführungen geleitet wird, und innerhalb der Segmente 30 eine Zuführnut 2, Verbindungakanäle 3 und eine Rückführnut 4 passiert, wobei die Verbindungskanäle 3 zueinander parallel und unter der Permeationsmembran angeordnet sind; und
daß die flüchtigen oder gelösten Komponenten enthaltende Trägermedium 1 aus der Rückführnut 4 über einen im Grundkörper 5 angeordneten Rückführkanal 10 einem temperaturstabilisierten Sensor für den quantitativen Konzentrationsnachweis zugeführt wird.

Für den Fall, daß das Trägermedium 1 zu mehreren Segmenten 30; 30' geleitet wird, erfolgt die Trägermediumzufuhr entsprechend dem Bedarf an Permeationsfläche durch Zuführung über den für jedes Segment separaten Zuführkanal 8, 8' usw.

Eine weitere Ausführungsform besteht darin, daß das Trägermedium 1 zu mehreren Segmenten 30; 30' usw. über den für jedes Segment separaten Zuführkanal 8, 8' usw. zugeleitet und über den für jedes Segment separaten Rückführkanal 10; 10' usw. abgeleitet wird und dabei die Meßwerte an einem oder mehreren Sensoren (7) oder an separaten Analysatoren außerhalb der Vorrichtung genommen werden.

Eine weitere Ausführungsform besteht darin, daß das Trägermedium (1) mehreren Segmenten zugeleitet wird, die sich unter verschiedenen Permeationsmembranen befinden, deren Stoffdurchgangsparameter unterschiedlich sind.

Die Vorrichtung wird in der Folge anhand von Ausführungsbeispielen mit Hilfe der Zeichnungen näher erläutert. Es zeigen:
Fig.1 die Oberfläche des Grundkörpers der erfindungsgemäßen Vorrichtung mit Permeationskanälen in perspektivischer Darstellung,
Fig. 2 die Temperaturabhängigkeit der Kennlinie eines SnO₂-Sensors nach dem Stand der Technik,
Fig. 3 eine Schnittansicht der erfindungsgemäßen Vorrichtung mit mehreren Segmenten der Permeationsfläche,
Fig. 4 eine weitere Schnittansicht der erfindungsgemäßen Vorrichtung mit nur einem Segment der Permeationsfläche,
Fig. 5 ein Fließbild der Erfindung, bei dem mehrere Segmente mit mehreren Sensoren verbunden sind.

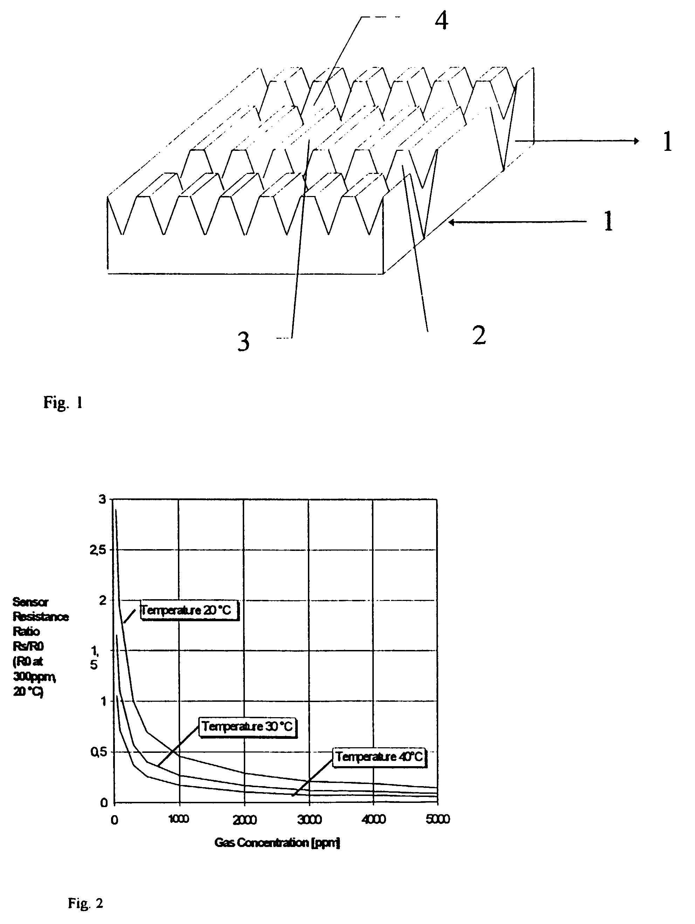

In Fig. 1 ist die abgerollte zylindrische Oberfläche des Sondenkörpers schematisch dargestellt. Das Trägergas 1 wird über eine Zuführnut 2 auf viele parallel angeordnete Permeationskanälen 3 aufgeteilt und dann über eine Rückführnut 4 einem Analysator zugeführt. Während Zuführnut 2 und Rückführnut 4 über ähnlich dimensionierte Querschnitte wie herkömmliche Sonden verfügen, ermöglicht die parallele Führung des Trägergases eine erhebliche Reduzierung der Querschnittsfläche der einzelnen Permeationskanäle 3. Die Summe der Querschnitte der einzelnen Permeationskanäle 3 kann beispielsweise dem Querschnitt der Zulaufnut 2 oder Ablaufnut 4 entsprechen, um eine konstante Strömungsgeschwindigkeit zu erzeugen. Die effektive Permeationsfläche für den Stoffübergang bleibt erhalten. Das darunter befindliche Trägergasvolumen ist erheblich geringer. Die Verweilzeit wird reduziert, der Trägergasstrom kann ggf. verringert werden. Der Sondenkörper ist durch einfache Oberflächenbearbeitung zu fertigen und kann über geringere Abmaße verfügen, falls dies die benötigte Austauschfläche erlaubt. Der einfache Aufbau der Sonde hat eine geringere Störanfälligkeit zur Folge.

Zum Vergleich sind in Tab. 1 zwei handelsübliche gewindeförmige Sonden (Vergleichsbeispiel 1 und 2) zwei scheitelförmigen erfindungsgemäßen Sonden (Beispiel 1 und 2) gegenübergestellt werden. Bei gleichen Außenabmaßen des Sondenfingers verfügen sie über gleiche Brutto-Permeationsflächen. Gegenüber der scheitelförmigen Sonde fehlen bei der gewindeförmigen Sonde die Zuführ- und Rückführnute, da hier der Zuführkanal direkt in den Permeationskanal mündet bzw. der Rückführkanal direkt von Permeationskanal abgeht. Der gewindeförmige Sondentyp hat einen einzigen Permeationskanal, der sich über die gesamte Permeationsfläche erstreckt. Die scheitelförmige Sonde verfügt über viele parallele und gleichlange Permeationskanäle. In der Tab. 1 wird, ideale Strömungsverhältnisse ohne Reibung vorausgesetzt, für den scheitelförmigen Sondentyp die Summe der Querschitte der parallelen Permeationskanäle dem Querschnitt der Zuführnut gleichgesetzt. Somit verfügt beispielsweise jeder der 100 Permeationskanäle der Vergleichssonde 1 (Beispiel 1) bei einer Kanalbreite von 0,25 mm und einer Kanaltiefe von 0,08 mm über eine Querschnittsfläche von 0,01 mm².

Aus Tab.1 wird ersichtlich, daß durch die scheitelförmige Anordnung der Permeationskanäle bei gleicher Permeationsfläche und gleichem Trägergasstrom je nach Sondenbauart ein Reduzierung des Trägergasvolumens im Permeationssegment und der Verweilzeit auf 5% bis 10% bei den in der Tabelle angegebenen und angenommenen Sondenmaßen möglich wird.

Da in der scheitelförmigen Sonde bei gleicher Permeationsfläche durch das geringere Trägergasvolumen ein schnellerer Konzentrationsausgleich an den Nachweiskomponenten stattfindet, kann die Permeationsfläche reduziert und somit die Baugröße des Sondenfingers verringert werden. Dies kommt wiederum den dynamischen Ansprecheigenschaften der scheitelförmigen Sonde zugute. Somit können bereits bei Anwendung der scheitelförmigen Permeationskanalführung auf nur einem Segment signifikante Vorteile gegenüber dem Stand der Technik erreicht werden.

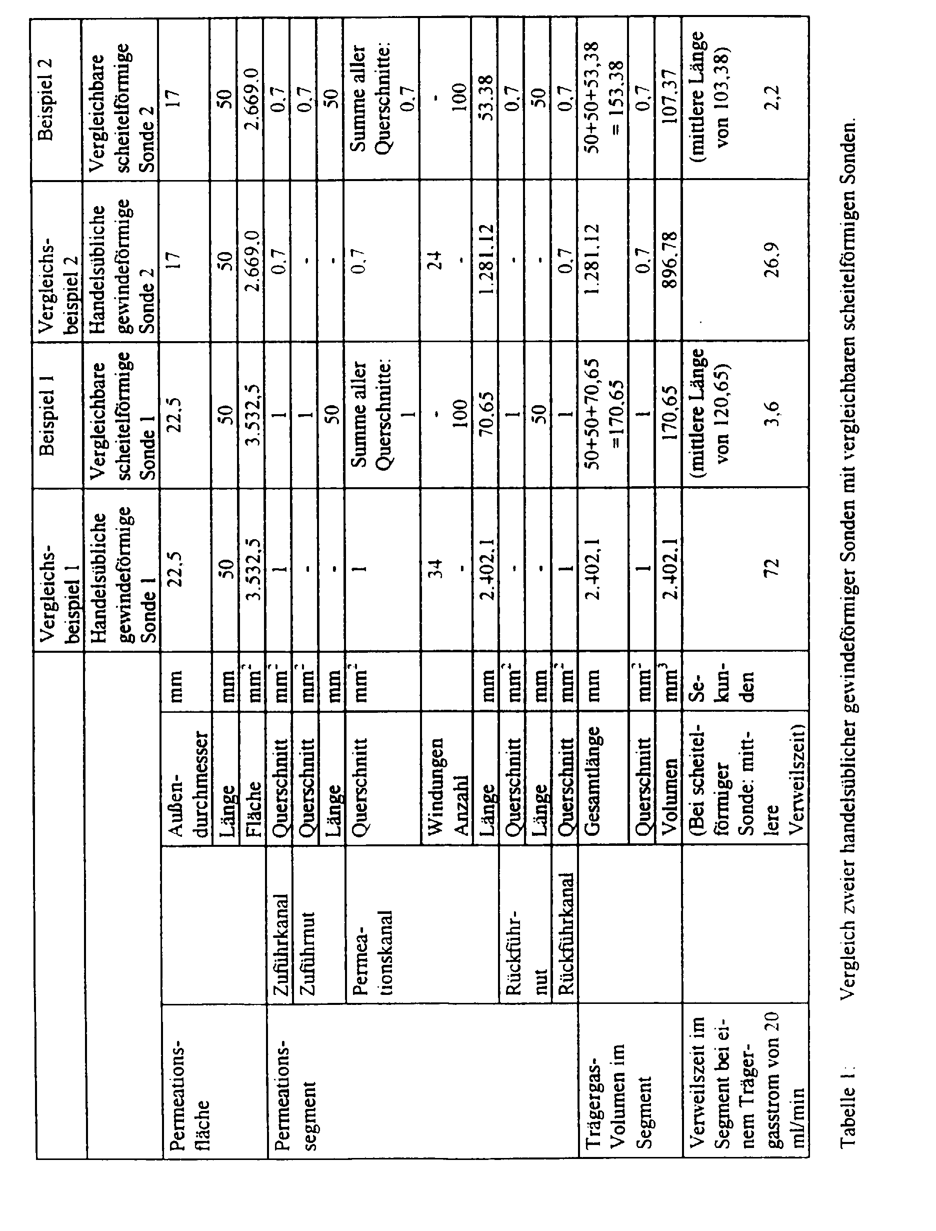

In Fig. 3 ist eine Vorrichtung mit einer im laufenden Betrieb stufenweise einstellbaren Permeationsfläche skizziert. Die Vorrichtung besteht im wesentlichen aus einem zylinderförmigem Grundkörper 5 einem Sensorträger 6 und einem Sensor 7. Durch die Trägergaseintritte 8, 8' wird das Trägergas 1, 1' über die Zuführkanäle 9, 9' die Zuführnuten 2, 2' den Permeationskanälen 3, die Rückführnuten 4, 4' die Rückführkanäle 10, 10' zum Sondenkopf geführt. Dabei wird das Trägergas 1, 1' über die Permeationsmembran 11, welche über dem Grundkörper 5 installiert ist, mit der in der Flüssigkeit gelösten Komponente angereichert. Im vorliegenden Ausführungsbeispiel werden vier Membransegmente 30, 30' verwendet. Sie werden einzeln über die Trägermedieneintritte 8, 8' gespeist. Die Segmente umfassen jeweils 25% der Permeationsfläche. Das mit Substanz angereicherte Trägergas wird in den Rückführkanälen 10, 10' gesammelt, im Sensor 7 quantitativ nachgewiesen und dem Trägermedienaustritt 12 zugeleitet.

Über die Abdichtung 13 und den Flansch 14 kann die Vorrichtung mittels Überwurfmutter in einem Behälter oder anderem Ausrüstungsteil installiert werden. Zum Schutz der Permeationsmembran 11 kann bei Bedarf eine schlauchförmige, ebenfalls permeable Schutzmembran (nicht dargestellt) sowie eine mit Durchtrittsöffnungen versehene Schutzhülse (nicht dargestellt) über der Permeationsmembran 11 installiert werden. Der Temperatursensor 15 ist direkt unter der Membran installiert. Seine Meßleitungen werden durch den Kanal 16 nach außen geführt. Die Membran-Temperaturmessung wird zur externen Korrektur des temperaturabhängigen Stoffübergangs verwendet. Sensorträger 6 und Sensor 7 sind unter einer Heizung 18 mit der Verschraubung 19 am Grundkörper 5 verschraubt und durch eine Wärmeisolationsschicht 17 von diesem getrennt. Der Temperatursensor 20 erfaßt die Sensor-Umgebungstemperatur und dient als Geber für die Regelung der Sensor-Umgebungstemperatur durch die Heizung 18. Die Heizung 18 dient zur Temperaturerhöhung, wenn die Sensor-Umgebungstemperatur unterhalb der Solltemperatur liegt. Der zylindrische Teil der Verschraubung 19 dient zur Abgabe von Wärme, falls die Sensor-Umgebungstemperatur größer als die Solltemperatur ist. Die Solltemperatur muß in diesem Falle über der Umgebungstemperatur der Sonde liegen, um den Kühleffekt zu ermöglichen. Die Meß- und Heizleitungen werden am Meßleitungsaustritt 21 aus der Sonde geführt.

Der Grundkörper 5 verfügt am Fußende über eine Gewindebohrung oder einen Gewindestift (nicht dargestellt). Bei Bedarf kann daran einen Stopfen mit Abdichtung installiert werden, um den Behälter befüllen zu können, während sich die Sonde in herausgezogener Position befindet.

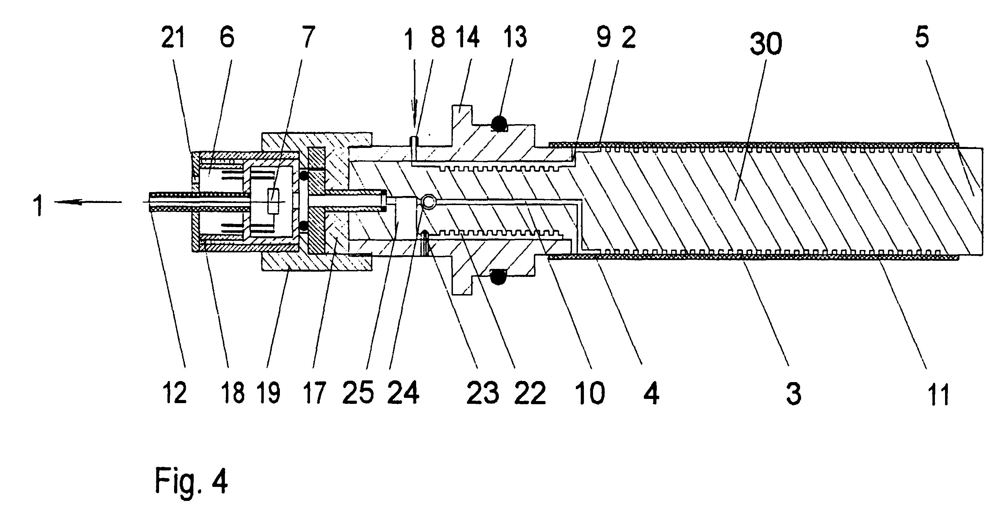

In Fig. 4 ist eine Vorrichtung mit Trägergas-Bypass und Sensor dargestellt, bei der nur ein Permeationsflächensegment 30 vorhanden ist. Durch den Trägergaseintritt 8 wird das Trägergas 1 über den Zuführkanal 9, die Zuführnut 2, die parallel angeordneten Permeationskanälen 3, die Rückführnut 4, den Rückführkanal 10 und die Regulierschraube 24 in den Mischraum 25 geführt. Dabei wird das Trägergas 1 über die Membran 11 mit Nachweissubstanz angereichert. Dabei strömt ein Teil des Trägergases 1 im Zuführkanal 9 über die Temperierkanäle 22 und die Regulierschraube 23 im Bypaß zum Mischraum 25. Dieser Bypaß wird nicht mit Nachweissubstanz angereichert. Das aus dem Mischraum 25 zum Sensor strömende Trägergas hat also insgesamt eine geringere Konzentration an Nachweissubstanz und erlaubt das Betreiben des Sensors im empfindlicheren Bereich der Sensorkennlinie.

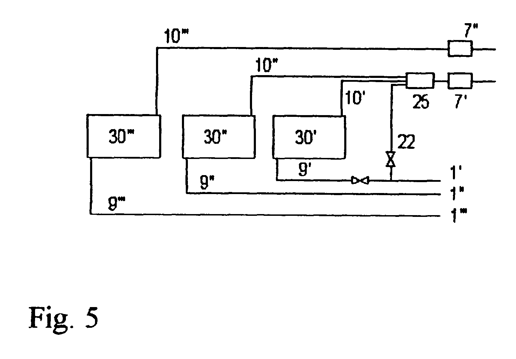

Aus Fig. 5 ist als Fließbild beispielhaft zu entnehmen, wie bei der Erfindung mehrere Segmente mit mehreren Sensoren verbunden sind.

## Patentansprüche

1. Vorrichtung zur Bestimmung flüchtiger oder gelöster Komponenten in Flüssigkeiten oder Gasen, bestehend aus einem zylindrischen Grundkörper (5) mit Permeationskanälen an seiner äußeren Oberfläche zur Aufnahme eines Trägermediums (1), einer über den Permeationskanälen angeordneten Permeationsmembran (11), Zu- und Rückführkanälen für das Trägermedium und Meßeinrichtungen, wie Konzentrationsmeßeinrichtungen, dadurch gekennzeichnet, daß die Permeationskanäle in mehreren Segmenten (30;30') an der Oberfläche des Grundkörpers (5) angeordnet sind, wobei jedes Segment (30;30') jeweils eine Zuführnut (2;2'), eine Rückführnut (4;4') und von der Zuführnut (2;2') zur Rückführnut (4;4') zueinander parallele Verbindungskanäle (3;3') aufweist; jedes Segment (30;30') über die Zuführnut (2;2) und einen separaten Zuführkanal (9;9') mit einem Trägermedieneintritt (8;8') verbunden ist; und jedes Segment (30, 30') über die Rückführnut (4;4') und einen oder mehrere Rückführkanäle (10;10') mit einem Trägermedienaustritt (12;12') verbunden ist.

2. Vorrichtung nach Anspruch 1, wobei die Segmente (30;30') zuschaltbar und abschaltbar sind und eine stufenweise einstellbare Permeationsfläche bilden.

3. Vorrichtung nach Anspruch 1, wobei im Grundkörper (5) zur Verdünnung des Trägermediums (1), das mit den zu bestimmenden Komponenten angereichert ist, Temperierkanäle (22) mit einem durch Stelleinrichtungen (23; 24) einstellbaren Trägermedien-Bypass angeordnet sind.

4. Vorrichtung nach einem der Ansprüche 1 bis 3, wobei ein erster Temperatursensor (15) direkt unter der Permeationsmembran (11) angeordnet ist, jedoch räumlich getrennt von den Konzentrationsmeßeinrichtungen, wie einem oder mehreren Sensor(en) (7) angeordnet ist.

5. Vorrichtung nach einem der Ansprüche 1 bis 4, wobei in Verbindung mit einem Rückführkanal (10, 10') der Sensor (7) der Konzentrationsmeßeinrichtung für die zu bestimmenden Komponenten angeordnet ist.

6. Vorrichtung nach Anspruch 4 oder 5, wobei ein zweiter Temperatursensor (20) zur Erfassung der Temperatur der Umgebung des Sensors (7) vorhanden ist.

7. Vorrichtung nach Anspruch 6, wobei eine Heizung (18) zur Regelung der Temperatur der Umgebung des Sensors (7) vorhanden ist.

8. Vorrichtung nach Anspruch 1, dadurch gekennzeichnet, daß die Summe der Querschnitte der Verbindungsnuten (3) dem Querschnitt der Zuführungsnut (2) oder der Rückführungsnut (4) entspricht.

9. Verfahren zur Bestimmung flüchtiger oder gelöster Komponenten in Flüssigkeiten oder Gasen durch Kontaktieren eines Gases oder einer Flüssigkeit mit einer Vorrichtung, die an ihrer Außenseite eine Permeationsmembran (11) mit darunter liegenden Permeationskanälen aufweist,
dadurch gekennzeichnet, daß in einem zylindrischen Grundkörper (5) der Vorrichtung ein Trägermedium (1) über einen Trägermediumeintritt (8;8') zu mehreren Segmenten (30;30') über jeweils separate Zuführungen geleitet wird, und innerhalb der Segmente (30;30') eine Zuführnut (2;2'), Verbindungskanäle (3;3') und eine Rückführnut (4;4') passiert, wobei die Verbindungskanäle (3;3') zueinander parallel und unter der Permeationsmembran angeordnet sind; und
daß die flüchtigen oder gelösten Komponenten enthaltende Trägermedium (1) aus der Rückführnut (4;4') über einen im Grundkörper (5) angeordneten Rückführkanal (10;10') einem temperaturstabilisierten Sensor für den quantitativen Konzentrationsnachweis zugeführt wird.

10. Verfahren nach Anspruch 9, worin das Trägermedium (1) zu mehreren Segmenten (30;30') geleitet wird und die Trägermediumzufuhr entsprechend dem Bedarf an Permeationsfläche durch Zuführung über den für jedes Segment separaten Zuführkanal (8; 8') erfolgt.

11. Verfahren nach Anspruch 10, worin das Trägermedium (1) zu mehreren Segmenten (30; 30') über den für jedes Segment separaten Zuführkanal (8; 8') zugeleitet und über den für jedes Segment separaten Rückführkanal (10; 10') abgeleitet wird und dabei die Meßwerte an einem oder mehreren Sensoren (7) oder an separaten Analysatoren außerhalb der Vorrichtung genommen werden.

12. Verfahren nach Anspruch 9, worin ein Teil des Trägermediums (1) über einen Bypaß vom Zuführkanal (9) vor dem Kontakt des Trägermediums mit der Permeationsmembran abgezogen, über Temperierkanäle auf eine Temperatur temperiert wird, die der Temperatur des Trägermediums nach Kontakt mit der Permeationsmembran entspricht, und danach einem Mischraum zugeführt wird, in dem mit Nachweissubstanz angereichertes Trägermedium mit dem von Nachweissubstanz freien Trägermedium vermischt wird, und das Gemisch dann dem Sensor (7) zugeführt wird.

13. Verfahren nach Anspruch 9, worin das Trägermedium (1) mehreren Segmenten zugeleitet wird, die sich unter verschiedenen Permeationsmembranen befinden, deren Stoffdurchgangsparameter unterschiedlich sind.

## Claims

1. A device for determining volatile or dissolved components in liquids or gases, consisting of a cylindrical base body (5) with permeation channels on its outside surface to receive a carrier medium (1), a permeation membrane (11) arranged above the permeation channels, supply and return channels for the carrier medium and measurement equipment such as concentration measurement devices, characterized in that
the permeation channels are arranged in multiple segments (30; 30') at the surface of the base body (5), where each segment (30; 30') has a supply groove (2; 2'), a return groove (4; 4') and parallel connecting channels (3; 3') from the supply groove (2; 2') to the return groove (4; 4'); each segment (30; 30') is connected to the carrier medium inlet (8; 8') through the supply groove (2; 2') and a separate supply channel (9; 9'); and each segment (30, 30) is connected to a carrier medium outlet (12; 12') by the return groove (4; 4') and one or more return channels (10; 10').

2. A device according to claim 1, where the segments (30; 30') can be switched on and off and form a permeation area that can be adjusted incrementally.

3. A device according to claim 1, where temperature equalization channels (22) with a carrier medium bypass that can be adjusted by control devices (23; 24) are arranged in the base body (5) for diluting the carrier medium (1) which is enriched with the components to be determined.

4. A device according to one of claims 1 through 3, where a first temperature sensor (15) is arranged directly below the permeation membrane (11) but is separated spatially from the concentration measurement equipment such as one or more sensors (7).

5. A device according to one of claims 1 through 4, where the sensor (7) of the concentration measurement equipment for the components to be determined is arranged in connection to a return channel (10, 10').

6. A device according to claim 4 or 5, where a second temperature sensor (20) is provided for detecting the temperature in the environment of the sensor (7).

7. A device according to claim 6, where a heating device (18) is provided to regulate the temperature in the environment of the sensor (7).

8. A device according to claim 1, characterized in that the sum of the cross sections of the connecting grooves (3) corresponds to the cross section of the supply groove (2) or the return groove (4).

9. A method of determining volatile or dissolved components in liquids or gases by bringing a gas or a liquid in contact with a device having a permeation membrane (11) on its outside with permeation channels underneath,
characterized in that a carrier medium (1) is conducted through a carrier medium inlet (8; 8') to multiple segments (30; 30') through separate supply lines in a cylindrical base body (5) of the device, and it passes through a supply groove (2; 2'), connecting channels (3; 3') and a return groove (4; 4') within the segments, where the connecting channels (3; 3') are parallel to one another and are arranged below the permeation membrane; and
the carrier medium (1) containing the volatile or dissolved components is sent from the return groove (4; 4') through a return channel (10; 10') arranged in the base body (5) to a temperature-stabilized sensor for quantitative detection of the concentration.

10. A method according to claim 9, where the carrier medium (1) is sent to multiple segments (30; 30') and the carrier medium is supplied as needed to the permeation area through supply through the separate supply channel (8; 8') for each segment.

11. A method according to claim 10, where the carrier medium (1) is sent to multiple segments (30; 30') through the separate supply channel (8; 8') for each segment and is removed through the separate return channel (10; 10') for each segment, and the resulting measured values are picked up at one or more sensors (7) or at separate analyzers outside the device.

12. A method according to claim 9, where a portion of the carrier medium (1) is removed from the supply channel (9) through a bypass before the carrier medium comes in contact with the permeation membrane, the temperature is equalized through temperature equalization channels at a temperature corresponding to the temperature of the carrier medium after coming in contact with the permeation membrane, and then it is sent to a mixing space, where the carrier medium enriched with the substance for detection is mixed with carrier medium free of the substance for detection, and the mixture is then sent to the sensor (7).

13. A method according to claim 9, where the carrier medium (1) is sent to multiple segments that are below different permeation membranes having different mass transfer parameters.

## Revendications

1. Dispositif permettant de détecter et d'éliminer des constituants volatils ou dissous dans des liquides ou des gaz, constitué d'un corps de base cylindrique (5) comprenant des canaux perméables à sa surface extérieure, pour réceptionner un milieu support (1), une membrane perméable (11) disposée par-dessus les canaux perméables, des canaux d'amenée et de retour pour le milieu support et des dispositifs de mesure, tels que dispositifs de mesure de la concentration, caractérisé en ce que les canaux perméables sont agencés en plusieurs segments (30; 30') à la surface du corps de base (5), chaque segment (30; 30') présentant une rainure d'amenée (2; 2'), une rainure de retour (4; 4') et des canaux de liaison (3; 3') parallèles entre eux menant de la rainure d'amenée (2; 2') à la rainure de retour (4; 4'); chaque segment est raccordé à une entrée de milieu support (8; 8') via la rainure d'amenée (2; 2') et un canal d'amenée séparé (9; 9'); et chaque segment (30; 30') est raccordé à une sortie de milieu support (12; 12') via la rainure de retour (4; 4') et un ou plusieurs canaux de retour (10; 10').

2. Dispositif selon la revendication 1, dans lequel les segments (30; 30') sont commandables à la fermeture et à l'ouverture, et constituent une surface perméable réglable graduellement.

3. Dispositif selon la revendication 1, dans lequel le corps de base (5) comporte des canaux d'égalisation de température (22) avec une dérivation de milieu support réglable à l'aide de dispositifs d'ajustement (23; 24), en vue de la dilution du milieu support (1) qui est enrichi des constituants à éliminer et à détecter.

4. Dispositifs selon l'une des revendications 1 à 3, dans lequel un premier capteur de température (15) est agencé directement sous la membrane perméable (11), mais séparé, dans l'espace, des dispositifs de mesure de la concentration, tels qu'un ou plusieurs capteur(s) (7).

5. Dispositif selon l'une des revendications 1 à 4, dans lequel le capteur (7) du dispositif de mesure de la concentration pour les constituants à détecter et à éliminer est placé en association avec un canal de retour (10; 10').

6. Dispositif selon la revendication 4 ou 5, dans lequel un deuxième capteur de température (20) est prévu pour détecter la température de l'environnement du capteur (7).

7. Dispositif selon la revendication 6, dans lequel un dispositif de chauffage (18) est prévu pour régler la température de l'environnement du capteur (7).

8. Dispositif selon la revendication 1, caractérisé en ce que la somme des sections transversales des rainures de liaison (3) correspond à la section transversale de la rainure d'amenée (2) ou de la rainure de retour (4).

9. Procédé permettant de détecter et d'éliminer des constituants volatils ou dissous dans des liquides ou des gaz, par mise en contact d'un gaz ou d'un liquide avec un dispositif présentant, sur sa face extérieure, une membrane perméable (11) avec des canaux perméables se trouvant en dessous de celle-ci,
caractérisé en ce que dans un corps de base (5) cylindrique du dispositif, un milieu support (1) est conduit via une entrée de milieu support (8; 8') vers plusieurs segments (30; 30'), chaque fois via des amenées séparées, et à l'intérieur du segment (30; 30') passent une rainure d'amenée (2; 2'), des canaux de liaison (3; 3') et une rainure de retour (4; 4'), les canaux de liaison (3; 3') étant parallèles entre eux et disposés sous la membrane perméable; et
en ce que du milieu support contenant les constituants est acheminé hors de la rainure de retour (4; 4'), via un canal de retour (10; 10') ménagé dans le corps de base (5), à un capteur à température stabilisée en vue de la détermination quantitative de la concentration.

10. Procédé selon la revendication 9, dans lequel le milieu support (1) est conduit vers plusieurs segments (30; 30') et l'apport de milieu support se fait selon les besoins en surface perméable par amenée via le canal d'amenée (8; 8') séparé pour chaque segment.

11. Procédé selon la revendication 10, dans lequel le milieu support (1) est acheminé vers plusieurs segments (30; 30') via le canal d'amenée (8; 8') séparé pour chaque segment, et est déviée via le canal de retour (10; 10') séparé pour chaque segment, et les valeurs de mesure étant relevées au niveau d'un ou de plusieurs capteurs (7) ou d'analyseurs séparés à l'extérieur du dispositif.

12. Procédé selon la revendication 9, dans lequel une partie du milieu support (1) est soutirée du canal d'amenée (9) via une dérivation avant le contact du milieu support avec la membrane perméable, est tempérée via des canaux d'égalisation de température, à une température qui correspond à la température du milieu support après contact avec la membrane perméable, et est ensuite amenée à une chambre de mélange, dans laquelle du milieu support enrichi de substance indicatrice est mélangé au milieu support exempt de substance indicatrice, et le mélange est acheminé au capteur (7).

13. Procédé selon la revendication 9, dans lequel le milieu support (1) est acheminé à plusieurs segments, qui se situent en dessous de différentes membranes perméables, dont les paramètres de transfert de masse sont différents.
